(19)

**Europäisches Patentamt**
**European Patent Office**
**Office européen des brevets**

(11) **EP 4 675 716 A1**

(12) **EUROPEAN PATENT APPLICATION**

(43) Date of publication:
**07.01.2026 Bulletin 2026/02**

(21) Application number: **24382716.9**

(22) Date of filing: **02.07.2024**

(51) International Patent Classification (IPC):
*H01M 8/04089* (2016.01)    *H01M 8/04119* (2016.01)
*H01M 8/04223* (2016.01)    *H01M 8/04291* (2016.01)
*H01M 8/04313* (2016.01)    *H01M 8/04492* (2016.01)
*H01M 8/04537* (2016.01)    *H01M 8/04746* (2016.01)
*H01M 8/04955* (2016.01)    *H01M 8/04664* (2016.01)

(52) Cooperative Patent Classification (CPC):
**H01M 8/04291; H01M 8/04097; H01M 8/04156;**
**H01M 8/04179; H01M 8/04231; H01M 8/04313;**
**H01M 8/04492; H01M 8/04552; H01M 8/04582;**
**H01M 8/04664; H01M 8/04746; H01M 8/04955;**
H01M 2250/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **AIRBUS OPERATIONS, S.L.U.**
**28906 Getafe (Madrid) (ES)**

(72) Inventors:
• **DELGADO OLLERO, Alfonso**
**28906 Getafe (Madrid) (ES)**
• **UBIERNA HUIDOBRO, Iñigo**
**28906 Getafe (Madrid) (ES)**
• **PARDO HERRERO, Mónica**
**28906 Getafe (Madrid) (ES)**
• **TEJELO MANZANO, Alfonso**
**28906 Getafe (Madrid) (ES)**

(74) Representative: **Herrero & Asociados, S.L.**
**Edificio Aqua - Calle Agustín de Foxá, 4-10, 2ºA**
**28036 Madrid (ES)**

(54) **SYSTEM AND METHOD FOR PREVENTING FLOODING IN VEHICLE FUEL CELLS AND AIRCRAFT COMPRISING SAID SYSTEM**

(57)    The system comprises a monitor (4) for monitoring the voltage and/or current of the fuel cell (5); a pitch and roll sensor (10) that detects the pitch and roll of the vehicle; a separator (6) where the water from the fuel cell (5) accumulates; a water level sensor (8) that the detects the water level inside the separator (6); and a water purge valve (7) that purges water from the fuel cell (5) when the monitor (4) detects a voltage and/or current value lower than a preset value, the operating frequency of the water purge valve being dependent on the voltage and/or current detected by the monitor (4), the water level detected by the water level sensor (8) and the pitch and roll of the vehicle detected by the pitch and roll sensor (10).

The system and method avoid the flooding problem, permitting the installation of the fuel cell in any orientation.

FIG. 1

## Description

The present invention relates to a system and method for preventing flooding in vehicle fuel cells, in particular in proton exchange membrane fuel cells used, for example, in aircrafts.

The present invention also relates to an aircraft comprising said system.

## Background of the invention

A proton exchange membrane fuel cell is a device that carries out an electrochemical reaction in which hydrogen reacts with oxygen to give water and electricity.

Hydrogen enters the anode that is separated from the cathode with a polymeric membrane, e.g. of polysulfone, where it diffuses its protons to the cathode where it reacts with oxygen of the air to give water.

In this type of fuel cells different mass transfer mechanisms occur in the membrane, which favor the formation and accumulation of water in the anode, obstructing the channels which the hydrogen passes through, blocking the H2 flow and producing a phenomenon called starvation.

This phenomenon implies that the electrochemical reaction will take place in areas free of water, resulting in hot spots and deterioration with possible membrane rupture.

For this reason, commercial fuel cells used in vehicles and stationary applications employ a hydrogen purge valve, which discharges a small amount of hydrogen saturated in water from the anode to the outside, removing the accumulated water from the channels.

The frequency and opening time of this valve is controlled by time or energy produced from the stack, that it is the latter parameter being correlated with the water accumulated in the anode.

The majority of commercial proton exchange membrane fuel cell are designed to be operated in horizontal configuration and pose a risk when tilted in pitch, because the accumulated water from the different cells that compose it, accumulates at one end or the other, depending on whether the angle is positive or negative, being the cells at the beginning or at the end.

In the aerospace sector, several anode architectures are being proposed, in which unreacted hydrogen from the stack is separated from the condensed water and recirculated through a recirculation compressor or through a passive ejector element.

The known solutions applied in aircrafts do not prevent anode flooding and stall failure caused by the natural movement of the aircraft during the different stages of take-off, cruise and landing.

## Description of the invention

Therefore, an objective of the present invention is to provide a system and method for preventing flooding in vehicle fuel cells that avoids the flooding problem, permitting the installation of the fuel cell in any orientation.

The system and method for preventing flooding in vehicle fuel cells of the invention solve the above-mentioned disadvantages and has other advantages which will be described below.

The system and method for preventing flooding in vehicle fuel cells according to the present invention are described in the corresponding independent claims, and the dependent claims include additional features that are optional.

In particular, the system for preventing flooding in vehicle fuel cells comprises:

- a monitor for monitoring the voltage and/or current of the fuel cell;
- a pitch and roll sensor that detects the pitch and roll of the vehicle;
- a separator where the water from the fuel cell accumulates;
- a water level sensor that the detects the water level inside the separator; and
- a water purge valve that purges water from the fuel cell when the monitor detects a voltage and/or current value lower than a preset value, the operating frequency of the water purge valve being dependent on the voltage and/or current detected by the monitor, the water level detected by the water level sensor and the pitch and roll of the vehicle detected by the pitch and roll sensor.

Furthermore, the system also comprises preferably a regulator that regulates flow and pressure of hydrogen supplied to the fuel cell.

The system for preventing flooding in vehicle fuel cells according to the present invention also comprises preferably a pump placed at the exit of the regulator that recirculates or ejects unreacted hydrogen.

According to a preferred embodiment, the fuel cell comprises a stack of cells.

Furthermore, the separator is preferably connected to the pump, and the system also comprises a hydrogen purge valve placed between the separator and the pump.

The system for preventing flooding in vehicle fuel cells according to the present invention also comprises preferably a controller for controlling at least the operation of the monitor and the water purge valve.

The method for preventing flooding in vehicle fuel cells comprises the following steps:

- monitoring the voltage and/or current of a fuel cell;
- detecting the pitch and roll of the vehicle;
- accumulating water from the fuel cell in a separator;
- detecting the water level inside the separator; and
- purging water from the fuel cell when the detected voltage and/or current is lower than a preset value, changing the purge operating frequency depending on the detected voltage and/or current, the detected water level and detected the pitch and roll of the vehicle.

Preferably, the method also comprises recirculating or ejecting hydrogen to the fuel cell, said hydrogen coming from a flow and pressure regulator and/or from the separator.

Furthermore, the method also comprises preferably purging hydrogen from the separator.

In the method according to the present invention, if the detected voltage and/or current is not restored to a value higher than the preset value after purging water and hydrogen, the fuel cell is preferably shutdown and disconnected to avoid any irreversible damage or catastrophic situation caused by these flooded cells.

The system and method according to the present invention avoids the flooding problem by changing the operating frequency of the purge valve according to the pitch and roll of the aircraft and the measured water by checking its health.

In this way, the stack can be installed horizontally in the most convenient place avoiding that the cells more susceptible to flooding can be starved.

The system and method according to the present invention also allow, as in commercial fuel cells, to go to emergency shutdown if the water cells are not cleaned and start to suffer a starvation due to lack of hydrogen, in order to prevent a possible irreversible damage and dangerous situation.

The present invention also relates to an aircraft comprising said system.

## Brief description of the drawings

For a better understanding of what has been explained above, some drawings are included in which, schematically and only by way of a non-limiting example, a practical case of embodiment is represented.

Figure 1 is a block diagram of the components of the system according to the present invention;

Figure 2 is a block diagram of the cell monitor used in the system according to the present invention connected to the fuel cell;

Figure 3 is a flow diagram of the method according to the present invention, during normal operation;

Figure 4 is a flow diagram of the method according to the present invention, when an aircraft comprising the system according to the present invention moves, avoiding the flooding of the fuel cells.

## Description of a preferred embodiment

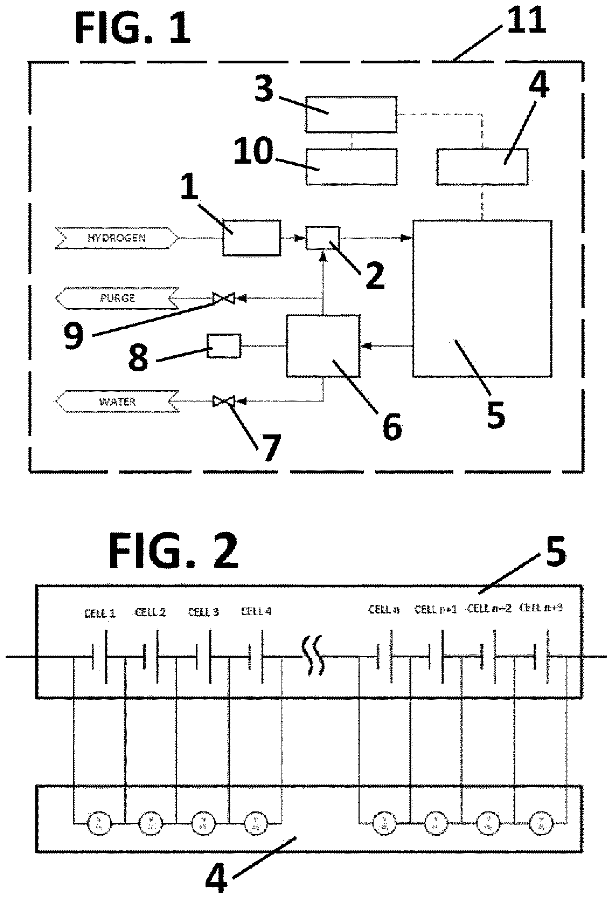

Figure 1 shows the components of an embodiment of the system according to the present invention.

The external profile 11 represents an aircraft wherein the system according to the present invention is installed.

The system comprises a regulator 1 that regulates the pressure and flow of hydrogen supplied to the system, and pump 2 placed after the regulator 1, for recirculating, or ejecting unreacted hydrogen.

The system according to the present invention also comprises a controller 3 that controls the operation of the system, that is connected to a cell monitor 4 and to a fuel cell 5, in particular, a proton exchange membrane fuel cell.

The system according to the present invention also comprises a separator 6 at the exit of the fuel cell 5, a condensed water purge valve 7 that purges the water from the separator 6, a water level sensor 8 placed in the separator 6 and a hydrogen purge valve 9, that purges the hydrogen from the separator 6.

Additionally, a pitch and roll sensor 10, such as an inclinometer, is used to obtain the actual pitch and roll data of an aircraft 11 or vehicle where the system according to the present invention is mounted.

In Figure 2 it can be seen that the fuel cell 5 comprises a plurality of cells or stack of cells, each being connected to a sensor of the monitor 4, so that voltage and/or current measurements are taken from each of the cells.

The operation of the system according to the present invention is the following.

The fuel cell 5 is constantly monitored by the cell monitor 4 and the level sensor 8 located in the separator 6 and connected to the controller 3.

If the fuel cell 5 becomes flooded during its tilting, the voltage and/or current of the flooded cells will decay with respect to the non-flooded cells.

On the other hand, the volume of water accumulated in the separator 6 can increase when dragging part of that water in the hydrogen recirculation, measured by the water level sensor 8.

This data is continuously collected by the controller 3, which in case the cell voltage and/or current drops below a voltage and/or current relative to its safety margin, opens the hydrogen purge valve 9 with a higher frequency than usual, in order to sweep the anode channels of that cell that are flooded and force that water to rise in the separator 6, starting the excess water carrying the recirculating hydrogen.

If the water level in the separator 6 is above its normal value during this operation, the water purge valve 7 opens, draining all the accumulated water. The opening time of these valves is tabulated by the regulator 1 to prevent the system from depressurizing during operation.

If for some reason, the voltage and/or current of the stack of cells fails to be restored after the opening of the purge valves 9, 7, the fuel cell 5 goes into a safe shutdown to avoid any irreversible damage or catastrophic situation caused by these flooded cells.

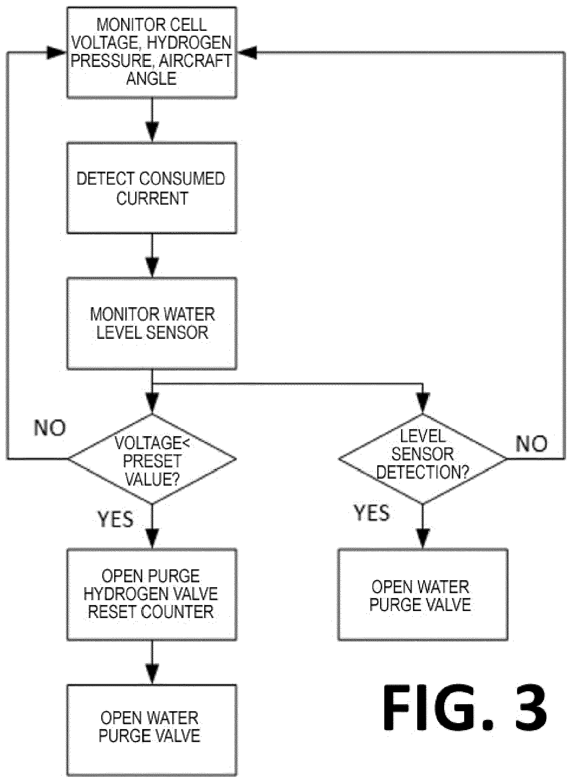

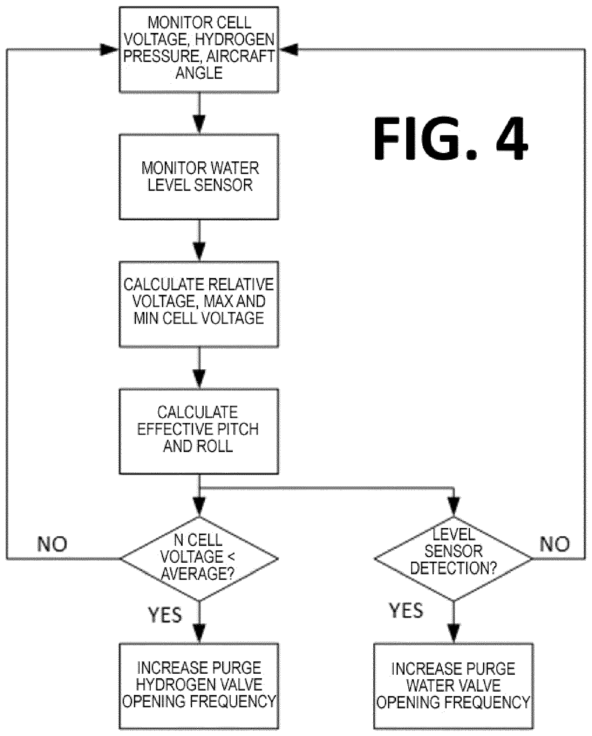

Figure 3 shows an embodiment the method according to the present invention during normal operation of the system and Figure 4, when a stack anomaly caused by aircraft motion is detected.

The relative voltage of each cell can be calculated in the controller 3 as follows in Eq. [1], in percent from the cell voltage data obtained by the cell monitor 4.

$$R_{CELL} = \frac{E_{CELL}}{\left(\dfrac{\Sigma \, \frac{1}{n_{CELL}}(E_{CELL})}{n_{CELL}}\right)} \cdot 100 \qquad [1]$$

If the relative voltage is below a defined value according to the tests (e.g. 90%), the method of Figure 4 is activated to try to recover the flooded cells. On the other hand, if the method could result in a failure, i.e., if the cells fail to recover their voltage because they are too flooded, the system is manually or automatically switched off to avoid total degradation.

**Claims**

1. System for preventing flooding in vehicle fuel cells, comprising:

   - a monitor (4) for monitoring the voltage and/or current of the fuel cell (5);
   - a pitch and roll sensor (10) that detects the pitch and roll of the vehicle;
   - a separator (6) where the water from the fuel cell (5) accumulates;
   - a water level sensor (8) that the detects the water level inside the separator (6); and
   - a water purge valve (7) that purges water from the fuel cell (5) when the monitor (4) detects a voltage and/or current value lower than a preset value, the operating frequency of the water purge valve being dependent on the voltage and/or current detected by the monitor (4), the water level detected by the water level sensor (8) and the pitch and roll of the vehicle detected by the pitch and roll sensor (10).

2. System for preventing flooding in vehicle fuel cells according to claim 1, wherein the system also comprises a regulator (1) that regulates flow and pressure of hydrogen supplied to the fuel cell (5).

3. System for preventing flooding in vehicle fuel cells according to claim 2, wherein the system also comprises a pump (2) placed at the exit of the regulator (1) that recirculates or ejects unreacted hydrogen.

4. System for preventing flooding in vehicle fuel cells according to any one of the previous claims, wherein the fuel cell (5) comprises a stack of cells.

5. System for preventing flooding in vehicle fuel cells according to claim 3, wherein the separator (6) is connected to the pump (2).

6. System for preventing flooding in vehicle fuel cells according to claim 5, wherein the system also comprises a hydrogen purge valve (9) placed between the separator (6) and the pump (2).

7. System for preventing flooding in vehicle fuel cells according to any one of the previous claims, wherein the system also comprises a controller (3) for controlling at least the operation of the monitor (4) and the water purge valve (7).

8. Method for preventing flooding in vehicle fuel cells, comprising the following steps:

   - monitoring the voltage and/or current of a fuel cell (5);
   - detecting the pitch and roll of the vehicle;
   - accumulating water from the fuel cell (5) in a separator (6);
   - detecting the water level inside the separator (6); and
   - purging water from the fuel cell (5) when the detected voltage and/or current is lower than a preset value, changing the purge operating frequency depending on the detected voltage and/or current, the detected water level and detected the pitch and roll of the vehicle.

9. Method for preventing flooding in vehicle fuel cells according to claim 8, wherein the method also comprises recirculating or ejecting hydrogen to the fuel cell (5), said hydrogen coming from a flow and pressure regulator (1) and/or from the separator (6).

10. Method for preventing flooding in vehicle fuel cells according to claim 9, wherein the method also comprises purging hydrogen from the separator (6).

11. Method for preventing flooding in vehicle fuel cells according to claims 8 and 10, wherein if the detected voltage and/or current is not restored to a value higher than the preset value after purging water and hydrogen, the fuel cell (5) is shutdown.

12. Aircraft (11) comprising a system according to anyone of claims 1-7.

# FIG. 1

11

3

4

10

1

HYDROGEN

2

PURGE

9

8

WATER

7

6

5

# FIG. 2

5

CELL 1   CELL 2   CELL 3   CELL 4       CELL n   CELL n+1   CELL n+2   CELL n+3

4

MONITOR CELL VOLTAGE, HYDROGEN PRESSURE, AIRCRAFT ANGLE

DETECT CONSUMED CURRENT

MONITOR WATER LEVEL SENSOR

VOLTAGE< PRESET VALUE?

NO

LEVEL SENSOR DETECTION?

NO

YES

OPEN PURGE HYDROGEN VALVE RESET COUNTER

YES

OPEN WATER PURGE VALVE

OPEN WATER PURGE VALVE

FIG. 3

```
┌─────────────────────┐
│   MONITOR CELL      │
│ VOLTAGE, HYDROGEN   │◄────────────────────────┐
│ PRESSURE, AIRCRAFT  │                          │
│      ANGLE          │                          │
└─────────┬───────────┘                          │
          │                                      │
          ▼                   FIG. 4             │
┌─────────────────────┐                          │
│   MONITOR WATER     │                          │
│   LEVEL SENSOR      │                          │
└─────────┬───────────┘                          │
          │                                      │
          ▼                                      │
┌─────────────────────┐                          │
│ CALCULATE RELATIVE  │                          │
│  VOLTAGE, MAX AND   │                          │
│  MIN CELL VOLTAGE   │                          │
└─────────┬───────────┘                          │
          │                                      │
          ▼                                      │
┌─────────────────────┐                          │
│    CALCULATE        │                          │
│ EFFECTIVE PITCH     │                          │
│    AND ROLL         │                          │
└─────────┬───────────┘                          │
          │                                      │
          ├──────────────────────┐              │
          ▼                       ▼              │
      ╱─────────╲            ╱─────────╲         │
NO   ╱  N CELL   ╲          ╱   LEVEL   ╲   NO   │
◄───╱  VOLTAGE <  ╲        ╱   SENSOR    ╲──────►│
     ╲  AVERAGE?  ╱        ╲  DETECTION? ╱       │
      ╲─────────╱           ╲─────────╱          │
          │                     │                │
        YES                   YES                │
          ▼                     ▼                │
┌─────────────────────┐ ┌─────────────────────┐ │
│ INCREASE PURGE      │ │ INCREASE PURGE      │ │
│ HYDROGEN VALVE      │ │  WATER VALVE        │ │
│OPENING FREQUENCY    │ │OPENING FREQUENCY    │ │
└─────────────────────┘ └─────────────────────┘
```

# EUROPEAN SEARCH REPORT

**Application Number**

EP 24 38 2716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/170502 A1 (TEENE EERO [CA] ET AL) 1 June 2023 (2023-06-01) | 1-10,12 | INV.<br>H01M8/04089 |
| Y | * figures 2, 5A-5C, 6A, 6B *<br>* paragraphs [0045], [0073] - [0086], [0093], [0097] - [0102] * | 11 | H01M8/04119<br>H01M8/04223<br>H01M8/04291<br>H01M8/04313 |
| Y | US 2021/359318 A1 (NAKANISHI JUNJI [JP] ET AL) 18 November 2021 (2021-11-18)<br>* figures 1,2 *<br>* paragraphs [0039] - [0045] * | 11 | H01M8/04492<br>H01M8/04537<br>H01M8/04746<br>H01M8/04955 |
| Y | US 2019/245227 A1 (KIM HYO-SEOP [KR]) 8 August 2019 (2019-08-08)<br>* figure 3 *<br>* paragraphs [0650] - [0054], [0001] - [0068] * | 11 | H01M8/04664 |

**TECHNICAL FIELDS SEARCHED (IPC)**

H01M

The present search report has been drawn up for all claims

| Place of search | Date of completion of the search | Examiner |
|---|---|---|
| Munich | 11 December 2024 | Jacquinot, Patrick |

EPO FORM 1503 03.82 (P04C01)

## ANNEX TO THE EUROPEAN SEARCH REPORT
## ON EUROPEAN PATENT APPLICATION NO.

EP 24 38 2716

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | | Publication date | Patent family member(s) | | Publication date |
|---|---|---|---|---|---|
| US 2023170502 A1 | | 01-06-2023 | CN | 116207305 A | 02-06-2023 |
| | | | EP | 4187654 A2 | 31-05-2023 |
| | | | US | 2023170502 A1 | 01-06-2023 |
| US 2021359318 A1 | | 18-11-2021 | CN | 113675438 A | 19-11-2021 |
| | | | JP | 7302528 B2 | 04-07-2023 |
| | | | JP | 2021180163 A | 18-11-2021 |
| | | | US | 2021359318 A1 | 18-11-2021 |
| US 2019245227 A1 | | 08-08-2019 | KR | 20190093951 A | 12-08-2019 |
| | | | US | 2019245227 A1 | 08-08-2019 |

EPO FORM P0459

For more details about this annex : see Official Journal of the European Patent Office, No. 12/82